# EUROPÄISCHE PATENTSCHRIFT

(11) **EP 3 299 144 B1**
(45) Veröffentlichungstag und Bekanntmachung des Hinweises auf die Patenterteilung: **30.10.2019**
(21) Anmeldenummer: 16020352.7
(22) Anmeldetag: 26.09.2016
(51) Int. Cl.: B29C 49/04, B29C 49/22, G01M 3/32, G01M 99/00, B65D 1/02, B29L 9/00

(54) **VERFAHREN ZUR DICHTIGKEITSPRÜFUNG EINES BEUTELS IM INNENRAUM EINES BEHÄLTERS**
METHOD FOR TESTING A BAG INSIDE A CONTAINER FOR LEAKAGE
PROCÉDÉ DE TEST D'ÉTANCHÉITÉ D'UNE POCHE À L'INTÉRIEUR D'UN RÉCIPIENT

(43) Veröffentlichungstag der Anmeldung: 28.03.2018
(73) Patentinhaber: Boehringer Ingelheim International GmbH, 55216 Ingelheim am Rhein (DE)
(72) Erfinder: MATHE, Gerald, 55216 Ingelheim (DE); COSTA PEREIRA-KIRCHWEHM, Carlos-Manuel, 55216 Ingelheim (DE)
(74) Vertreter: Von Rohr Patentanwälte Partnerschaft mbB

(56) Entgegenhaltungen:
- EP-A1- 0 313 678
- EP-A1- 0 967 472
- EP-A1- 2 172 400
- WO-A1-01/39957
- WO-A1-01/76849
- AU-A1- 2014 355 544
- DE-A1- 10 240 295
- DE-A1-102006 012 487
- DE-U1- 8 433 745
- FR-A1- 2 905 176
- US-A1- 2002 001 687
- US-A1- 2004 112 921
- EDER F X: "MODERNE MESSMETHODEN DER PHYSIK. TEIL I MECHANIK-AKUSTIK. VOLUMENOMETER, PASSAGE", HOCHSCHULBUECHER FUER PHYSIK, XX, XX, Bd. 1, 1. Januar 1952 (1952-01-01), Seite 78, XP002072641,

## Beschreibung

Die vorliegende Erfindung betrifft grundsätzlich Behälter mit innenliegendem Beutel.

Behälter der in Rede stehenden Art sind einerseits zur Separation von Inhalt und Treibmittel bekannt, beispielsweise aus der DE 2 927 708 A1 betreffend einen Behälter zur Bildung einer Sprühdose. Hierbei trennt der innenliegende Beutel ein in dem Beutel befindliches Medium wie eine Flüssigkeit von einem Treibmittel, das den Beutel umgibt bzw. zwischen dem Beutel und der Innenseite einer Wand des Behälters angeordnet ist. Andererseits sind beispielsweise aus der DE 2 438 298 A1 oder der GB2155117 A1 aus dem Bereich von Dispensern für Kosmetika Behälter mit innenliegendem Beutel auch ohne Treibmittel bekannt.

In der DE102006012487 wird eine Vorrichtung und ein Verfahren zur Herstellung eines Behälters mit innen liegendem Beutel beschrieben. Der Beutel wird zum Zweck der Dichtigkeitsprüfung mit einem Druckmedium gefüllt und der Druckverlauf im Behälter wird gemessen und anhand des Druckverlaufs wird beurteilt ob der Beutel dicht ist.

Die EP 0 313 678 A1 betrifft eine Anordnung zur Dichteprüfung eines Hohlkörpers bzw. eines Beutels. Der Hohlkörper wird in einer Prüfkammer von außen mit Druck beaufschlagt, wobei ein positiver oder negativer Differenzdruck zwischen Hohlkörperinnendruck und Druck in der Prüfkammer eingestellt werden kann. Aus dem Verhalten des Drucks in der Prüfkammer wird auf die Volumenänderung geschlossen. Durch den Vergleich von Ist-Werten für den Druck mit Soll-Werten kann beurteilt werden, ob der geprüfte Hohlkörper bzw. Beutel dicht ist.

Aus der WO 01/76849 A1 ist ein Behälter bekannt, bei dem ein Beutel im Innenraum des Behälters ausgebildet ist. Der Behälter weist eine Öffnung für die Entnahme eines in dem Beutel befindlichen Mediums und zusätzlich eine Belüftungsöffnung auf, die ein Ein- und Ausströmen von Umgebungsluft auf der dem Medium abgewandten Seite zwischen Behälterwand und Beutel ermöglicht. Der Beutel ist hierbei kollabierbar. Ein Unterdruck, der bei Entnahme von Medium aus dem Beutel erzeugt wird, kann angesichts der durch die Belüftungsöffnung auf die Beutel-Umgebung einströmende Luft durch Kollabieren des Beutels ausgeglichen bzw. verhindert werden.

Die AU 2014355544 A1 betrifft einen Delaminationsbehälter mit einem Behälterkörper, der eine äußere Hülle und einen inneren Beutel ausweist und bei dem ein Ventilelement zur Einstellung des Eintritts und Austritts von Luft zwischen der äußeren Hülle und dem inneren Beutel vorgesehen ist.

Die US 2004/112921 A1 betrifft einen trennbar laminierten Behälter mit einer Außenschicht aus Kunstharz mit einem Lüftungsloch und einer Innenschicht aus Kunstharz, die auf der Innenseite des Behälters trennbar laminiert ist. Das Lüftungsloch kann gebildet werden, indem ein Stempel in die Außenschicht an einem Hals des Behälters von außen eingetrieben wird.

Aufgabe der vorliegenden Erfindung ist es, ein Verfahren und ein zugehöriges Computerprogrammprodukt und eine Anlage und ihre Verwendung anzugeben, womit ein Behälter mit innenliegendem Beutel erzeugt werden kann. Des Weiteren ist eine Aufgabe der vorliegenden Erfindung, einen Behälter mit innenliegendem Beutel anzugeben, bei dem die Funktion des Behälters und/oder die Zuverlässigkeit der Kollabierbarkeit bzw. des Druckausgleichs verbessert ist.

Diese Aufgabe wird durch ein Verfahren gemäß Anspruch 1, eine Anlage gemäß Anspruch 10, ein Computerprodukt gemäß Anspruch 14 oder eine Verwendung gemäß Anspruch 15 gelöst. Vorteilhafte Weiterbildungen sind Gegenstand der Unteransprüche.

Die vorliegende Erfindung betrifft besonders bevorzugt Behälter mit innenliegendem Beutel, bei denen durch Ablösen von Beutelmaterial von einer Innenseite einer Wand des Behälters ein in dem Behälter befindlicher Beutel gebildet wird oder die Kollabierbarkeit des Beutels sichergestellt wird. Hierbei weist der Behälter eine Entnahmeöffnung zur Entnahme eines in dem Beutel befindlichen oder einfüllbaren Mediums und eine Belüftungsöffnung auf, durch die Umgebungsluft für einen Druckausgleich zur Außenseite des Beutels gelangen kann.

Der Innenraum des Behälters bzw. das durch eine ein dem Behälter seine Form verleihende Wand gebildete Volumen weist eine der Entnahmeöffnung zugeordnete Entnahmeseite und eine der Belüftungsöffnung zugeordnete Belüftungsseite auf, die durch das Beutelmaterial voneinander getrennt sind. Insbesondere ist vorgesehen, dass der Beutel bzw. das Beutelmaterial (das den Beutel bildende Material) eine Barriere zwischen unterschiedlichen Abschnitten des Innenraums des Behälters bildet und hierdurch den mit der Entnahmeöffnung fluidisch verbundenen Innenraum des Beutels von der mit der Außenseite des Beutels verbundenen Belüftungsöffnung, insbesondere fluiddicht und/oder vorzugsweise luftdicht, trennt.

Die Entnahmeseite entspricht vorzugsweise der Innenseite des Beutels oder ist dieser zugeordnet. Mit anderen Worten entspricht die Entnahmeseite dem von dem Beutel bzw. dem den Beutel bildenden Material umschlossenen Raum oder ist hiermit fluidisch verbunden.

Die Belüftungsseite entspricht vorzugsweise der Außenseite des Beutels oder ist dieser zugeordnet. Mit anderen Worten entspricht die Belüftungsseite dem zwischen der Innenseite des Außenbehälters und dem Beutel bzw. dem den Beutel bildenden Material ausgebildeten Raum oder ist hiermit fluidisch verbunden.

Der Behälter weist vorzugsweise einen im Wesentlichen formsteifen oder formstabilen Außenbehälter auf, der durch die Wand des Behälters gebildet ist.

Der Behälter wird vorzugsweise durch ein Extrusions-Blasverfahren hergestellt, wobei aus dem die Wand bildenden Material (insbesondere nach geeigneter Erwärmung) zunächst ein Schlauch gebildet wird. Im Anschluss kann dieser Schlauch in die Behälterform gebracht werden. Vorzugsweise wird hierzu durch eine Schlauchöffnung Gas, insbesondere Luft, eingeleitet, so dass das Schlauchmaterial von innen gegen die Form gedrückt bzw. geblasen wird (Abformschritt im Fertigungsverfahren).

Es ist besonders bevorzugt, dass das Beutelmaterial bei der Herstellung des Behälters mit dem die Wand des Behälters bildenden Material koextrudiert wird. Hierbei werden gleichzeitig zwei koaxiale und unmittelbar aneinander anliegende Schläuche bzw. ein zweischichtiger Schlauch gebildet. Die beiden Schläuche bzw. die beiden Schichten bestehen vorzugsweise aus unterschiedlichen Materialien. Der äußere Schlauch bzw. die äußere Schicht des Schlauchs bildet die spätere Wand (Außenseite) und der innere Schlauch bzw. die innere Schicht des Schlauchs bildet den späteren Beutel (Innenseite) des Behälters. Hierbei bleibt das Beutelmaterial vorzugsweise von dem die Wand des Behälters bildenden Material trennbar, beispielsweise durch Verwendung von Kunststoffen, die keine dauerhafte, untrennbare Verbindung miteinander eingehenden, bevorzugt durch die Verwendung von verschiedenen thermoplastischen Kunststoffen und/oder durch Verwendung eines Trennmittels.

Aus mittels der beschriebenen Koextrusion oder auf andere Weise erzeugten, koaxialen und unmittelbar aneinander anliegenden Schläuchen, welche die Wand (Außenseite) und den Beutel (Innenseite) bildende Materialien darstellen, wird vorzugsweise mittels eines Blasverfahrens, der Behälter erzeugt. Im Anschluss haftet das Beutelmaterial noch an der Innenseite der Wand des Behälters an.

Die Aspekte der vorliegenden Erfindung sind besonders vorteilhaft bei in der zuvor beschriebenen Weise hergestellten Behältern, können jedoch auch bei auf andere Weise gebildete Behälter anwendbar sein, bei denen vorzugsweise, insbesondere fertigungsbedingt, ein Beutelmaterial zunächst an der Innenwand des Behälters anhaftet.

Gemäß der Erfindung wird der Grad der Dichtigkeit des Beutels ermittelt. Hierbei wird zunächst die Entnahmeseite im Vergleich zur Belüftungsseite mit Überdruck beaufschlagt, so dass sich der Beutel an die Wand des Behälters anlegt. Ferner wird auf oder mit der Belüftungsseite ein abgeschlossenes Prüfvolumen erzeugt. In diesem Prüfvolumen wird nach einer oder in Abhängigkeit von einer Testdauer ein Druck oder eine Druckdifferenz ermittelt und dieser Druck oder diese Druckdifferenz wird als Indikator für den Grad der Dichtigkeit des Beutels verwendet.

Hierbei ist besonders bevorzugt, dass das Prüfvolumen zunächst ein Vakuum bzw. einen Unterduck im Vergleich zu einem Druck auf der Entnahmeseite und/oder im Vergleich zum Umgebungsdruck bzw. Normaldruck aufweist. Dieses Vakuum bzw. dieser Unterdruck kann durch Entnehmen, insbesondere Abpumpen, von Luft aus dem Prüfvolumen erzeugt werden. In diesem Zustand des Prüfvolumens wird eine erste Druckmessung durchgeführt. Bei oder nach der Testdauer wird dann mindestens eine zweite Druckmessung durchgeführt, um den Druck oder den Differenzdruck zu ermitteln.

Im Sinne der vorliegenden Erfindung wird vorzugsweise bereits ein absoluter Druck von weniger als 70 kPa, vorzugsweise weniger als 60 kPa, insbesondere weniger als 50 kPa als "Vakuum" bezeichnet. Bei dem Vakuum kann es sich insbesondere um ein Grobvakuum (absoluter Druck von 0,1 bis 30 kPa) handeln.

Als "Unterdruck" ist vorzugsweise ein Druck zu verstehen, der unterhalb des Umgebungsdrucks (Normaldruck oder 101,3 kPa) oder dem Druck eines anderen Bezugsvolumens liegt, vorzugsweise um mehr als 30 kPa, insbesondere mehr als 40 kPa. Bei dem Unterdruck kann es sich um einen absoluten Druck handeln, der an den Druckbereich eines Grobvakuums grenzt oder höchstens 40 kPa, 30 kPa oder 20 kPa über dem maximal als Grobvakuum bezeichneten Unterdruck von 30 kPa liegt.

Im konkreten Fall der Dichtigkeitsprüfung wird vorzugsweise ein Vakuum bzw. Unterdruck in dem Prüfvolumen erzeugt, das initial bzw. bei der ersten Messung vorzugweise einem Druck unterhalb des Umgebungsdrucks (Normaldruck oder 101,3 kPa) von mindestens 30 kPa, vorzugsweise mehr als 40 kPa oder 50 kPa und/oder weniger als 80 kPa, insbesondere weniger als 70 kPa unterhalb des Umgebungsdrucks (Normaldruck oder 101,3 kPa) entspricht. Der Absolute Druck in dem Prüfvolumen beträgt entsprechend vorzugsweise weniger als 70 kPa, vorzugsweise weniger als 60 kPa, insbesondere weniger als 50 kPa, und/oder mehr als 20 kPa, insbesondere mehr als 30 kPa.

Die Entnahmeseite kann über die Testdauer gegenüber der Belüftungsseite einen zumindest im Wesentlichen konstanten oder variablen Überdruck aufweisen. Es ist möglich, dass die Entnahmeseite belüftet ist, also mit der Umgebung derart verbunden ist, dass Umgebungsluft ein- und austreten kann. In diesem Fall entspricht die Druckdifferenz zwischen Belüftungsseite und Entnahmeseite betragsmäßig dem Unterdruck auf der Belüftungsseite. Besonders bevorzugt ist hingegen ein Überdruck auf der Entlüftungsseite gegenüber der Umgebung, beispielsweise von 150 kPa bis 250 kPa über Umgebungsdruck und/oder gegenüber der Belüftungsseite, beispielsweise von 200 kPa bis 300 kPa.

Das beschriebene Verfahren zur Dichtigkeitsprüfung hat den Vorteil, dass durch Anlegen des Beutels an die Wand des Behälters die Flexibilität bzw. Elastizität des Beutels das Messergebnis nicht beeinflusst und in Folge dessen ein Druckanstieg auf der entlüfteten bzw. evakuierten Belüftungsseite mit hoher Zuverlässigkeit zu einer Dichtigkeit korrespondiert und daher gut als Indikator für den Grad der Dichtigkeit verwendet werden kann. Außerdem schützt die Wand des Behälters das Beutelmaterial vor Überdehnung durch innen angelegten Überdruck.

Ferner hat die Messung des Unterdrucks auf der Belüftungsseite den Vorteil, dass niedrige Druckdruckdifferenzen mit verhältnismäßig geringem Aufwand sehr genau bestimmt werden können. Hierdurch wird eine zuverlässige Bestimmung des Grads der Dichtigkeit bei gleichzeitig verhältnismäßig geringem Aufwand ermöglicht.

Die Dichtigkeitsprüfung des Beutels kann in vorteilhafter Weise mit den zuvor erläuterten Aspekten kombiniert werden. Hierbei kann während des Ablösevorgangs und/oder der Ermittlung des Ablösegrads eine Prüfung auf Groblecks erfolgen und die Dichtigkeitsprüfung des Beutels erfolgt nur für den Fall, dass keine Groblecks detektiert worden sind. Alternativ oder zusätzlich erfolgt die Dichtigkeitsprüfung nur in dem Fall, dass ein ausreichender Ablösegrad ermittelt wurde, der Beutel ausreichend kollabierbar ist bzw. die hierzu korrespondierende Kenngröße in einem zuvor definierten Bereich bzw. Toleranzbereich liegt, der Behälter also nicht bereits bei den vorhergehenden Aspekten aussortiert worden ist.

Ein weiterer Aspekt der vorliegenden Erfindung betrifft eine Anlage, die zur Durchführung des Verfahrens der vorliegenden Erfindung ausgebildet ist. Die Anlage weist eine (Prüf-) Kammer auf, in die der Behälter derart eingesetzt ist, dass die Prüfkammer die Entnahmeseite und die Belüftungsseite getrennt voneinander dicht anbindet. Insbesondere weist die Prüfkammer mindestens zwei Zugänge und Dichtmittel auf, um die Entnahmeseite und die Belüftungsseite voneinander abgedichtet zugänglich zu machen.

Vorzugsweise weist die Anlage ein Druckspeichervolumen, insbesondere einen Druckausgleichsbehälter, auf und ist dazu ausgebildet, das Druckspeichervolumen auf einen (vorgebbaren) Druck zu bringen, der sich von dem Druck der Belüftungsseite unterscheidet. Weiter weist die Anlage vorzugsweise ein Ventil auf, welches das Druckspeichervolumen mittels der Prüfkammer mit der Belüftungsseite verbindet, so dass ein Druckausgleich zwischen dem Druckspeichervolumen und der Belüftungsseite stattfinden kann. Dieses oder ein weiteres Ventil kann verwendet werden, um vor dem Druckausgleich das Druckspeichervolumen zu separieren, insbesondere von einer Druckquelle zu trennen. Weiter weist die Anlage vorzugsweise einen Drucksensor auf, der zur Ermittlung einer Druckänderung bei oder nach Herstellung der Verbindung zwischen der Belüftungsseite und dem Druckspeichervolumen ausgebildet ist. Hierzu kann der Drucksensor am Druckspeichervolumen, an der belüftungsseitigen Prüfkammer oder dazwischen vorgesehen oder angebunden sein. Hierdurch ist es möglich, ein Grobleck zu detektieren, wenn mittels des Drucksensors ein Druckabfall ermittelt wird, der einen Grenzwert überschreitet.

Gemäß der vorliegenden Erfindung ist die Anlage zur Bestimmung des Grads der Dichtigkeit bzw. Dichtigkeitsprüfung oder Leckageprüfung von in Behältern vorgesehenen Beuteln ausgebildet, wobei ein Differenzdruck zwischen der Entnahmeseite und der Belüftungsseite aufgebaut werden kann und die Anlage einen Drucksensor und eine mit dem Drucksensor verbundene Auswerteeinrichtung aufweist. Die Auswerteeinrichtung ist dabei dazu ausgebildet, eine Änderung des Differenzdrucks zu messen und diese Änderung mit einem Schwellwert zu vergleichen.

Vorzugsweise kann die Anlage bei oder durch Erreichen, Überschreiten oder Unterschreiten des Schwellwerts eine Dichtigkeit, Undichtigkeit, Leckage oder deren Grad detektieren, und, vorzugsweise, ggf. ein Verwerfen des Behälters zu initiieren.

Insbesondere ist die Anlage dazu ausgebildet, zur Bestimmung des Grads der Dichtigkeit bzw. zur Dichtigkeitsprüfung oder Leckageprüfung auf der Belüftungsseite einen Unterdruck im Vergleich zur Entnahmeseite und/oder zur Umgebung zu erzeugen. Weiter ist bevorzugt, dass die Anlage dazu ausgebildet ist, auf der Entnahmeseite einen Überdruck gegenüber der Belüftungsseite und/oder der Umgebung zu erzeugen. Auf diese Weise kann mit der Anlage ein Differenzdruck erzeugt werden. Im Anschluss daran wird vorzugsweise nach oder über einer Zeitspanne eine Druckänderung auf der Belüftungsseite durch die Anlage ermittelt und auf dieser Basis die Dichtigkeit geprüft bzw. der Grad der Dichtigkeit bestimmt.

Der Drucksensor kann mit der Belüftungsseite verbunden sein.

Ferner ist bevorzugt, dass die Anlage zur Evakuierung bzw. Druckabsenkung auf der Belüftungsseite eine Vakuumpumpe aufweist. Alternativ oder zusätzlich weist die Anlage eine Druckpumpe, Druckluftquelle oder sonstige Einrichtung zur Erzeugung eines Überdrucks auf der Entnahmeseite auf.

Bei einer Druckdifferenz, die durch einen an der Entnahmeseite angelegten Überdruck erzeugt wird, legt sich der Beutel an die Behälterwand an. Infolge dessen kann sichergestellt werden, dass eine später detektierte Änderung des (Unter-) Drucks auf der Belüftungsseite mit einer Durchlässigkeit des Beutels in Verbindung steht. Insbesondere wird folglich sichergestellt, dass das Ergebnis, also die späte detektierte Änderung des (Unter-)Drucks nicht durch Volumenschwankungen wie durch zusätzliches Aufblähen des Beutels beeinflusst werden. Ferner hat sich als besonders schnell und genau die Beobachtung des (Unter-)Drucks auf der Belüftungsseite erwiesen, da hierdurch bereits geringe Druckanstiege sicher detektiert und zur Erkennung einer Leckage verwendet werden können. Als besonders vorteilhaft hat sich ein (Grob-)Vakuum oder Unterdruck zur genauen Ermittlung erwiesen, da hierbei auftretende Druckschwankungen sehr genau ermittelt und folglich auch geringfügige Leckagen des Beutels sicher detektiert werden können.

Ein weiterer, auch unabhängig realisierbarer Aspekt der vorliegenden Erfindung betrifft ein Computerprogrammprodukt aufweisend Programmcodemittel, die, wenn sie ausgeführt werden, ein Verfahren gemäß der vorliegenden Erfindung ausführen, insbesondere mit der vorschlagemäßen Anlage. Bei dem Computerprogrammprodukt kann es sich um ein computerlesbares Speichermedium und/oder eine Steuereinrichtung handeln, die durch Druckregelung und/oder Ventilsteuerung eine sukzessive Ablösung des Beutelmaterials bewirkt, eine Ermittlung des Ablösegrads des Beutels mittels eines Drucksensors und der Auswertung der Drucksensordaten ermöglicht und/oder die Verifikation einer Dichtigkeit durch Auswertung eines zeitlichen Verlaufs von Drucksensordaten ermöglicht.

Ein weiterer, auch unabhängig realisierbarer Aspekt der vorliegenden Erfindung betrifft die Verwendung einer vorschlagsgemäßen Anlage zur Erzeugung eines Beutels in einem Behälter durch Ablösen des Beutelmaterials und/oder zur Prüfung des Behälters mit einem der vorschlagsgemäßen Verfahren.

Weitere Aspekte und Vorteile der vorliegenden Erfindung ergeben sich aus den Ansprüchen und aus der folgenden Beschreibung eines bevorzugten Ausführungsbeispiels anhand der Zeichnung.

In der Zeichnung zeigt:
- Fig. 1: einen schematischen Querschnitt einer vorschlagsgemäßen Anlage zur Dichtigkeitsprüfung des Beutels;
- Fig. 2: einen schematischen Querschnitt einer vorschlagemäßen Anlage zur Dichtigkeitsprüfung;

- Fig.: 3 ein schematisches Blockdiagram betreffend die Dichtigkeitsprüfung;
- Fig.: 4 ein schematisches Druckverlaufs-Diagramm im Verfahren der Dichtigkeitsprüfung; und

In den Figuren werden die selben Bezugszeichen für gleiche oder ähnliche Teile verwendet, wobei entsprechende Teile zueinander korrespondieren können und/oder entsprechende Eigenschaften und Vorteile erreicht werden können, auch wenn von einer wiederholten Beschreibung abgesehen wird.

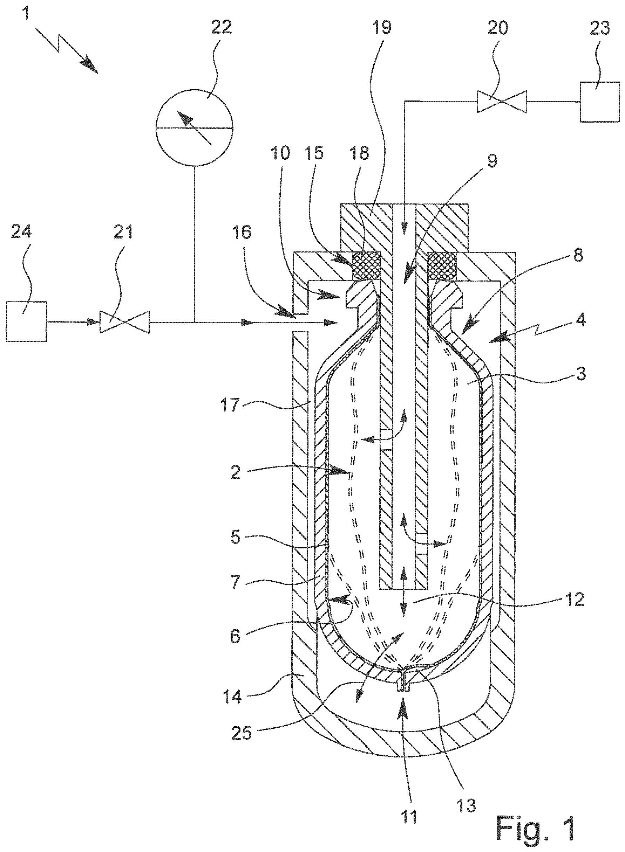

Fig. 1 zeigt den schematischen Querschnitt einer Anlage 1 zur Dichtigkeitsprüfung eines Beutels 2 im Innenraum 3 eines Behälters 4.

Der Behälter 4 weist einen Außenbehälter 8 auf, der die Wand 7 aufweist oder hierdurch gebildet ist. Der Außenbehälter 8 bzw. die Wand 7 ist/sind vorzugsweise zumindest im Wesentlichen formstabil bzw. formsteif, kann bzw. können jedoch durch eine Kraft vorzugsweise elastisch und/oder reversibel verformt werden. Der Außenbehälter 8 gibt dem Behälter 4 seine Form und definiert seine Öffnungen.

Insbesondere haftet das Beutelmaterial 5 zunächst an einer Innenseite 6 der Wand 7 des Behälters 4 an.

Das Beutelmaterial 5 kleidet den Außenbehälter 8 bzw. die Wand 7 vorzugsweise innenseitig zumindest im Wesentlichen aus. Dies kann insbesondere dadurch erreicht werden, dass der Behälter 4 mit aneinander anliegenden Schichten aus Beutelmaterial 5 und Material der Wand 7 hergestellt wird. Hierzu werden das Beutelmaterial 5 und die Wand 7 insbesondere zunächst zu zwei koaxialen Schläuchen geformt, insbesondere koextrudiert, woraufhin dem Behälter 4, vorzugsweise mittels eines Blasverfahrens, seine Form verliehen wird.

Das Beutelmaterial 5 und die Wand 7 gehen keine permanente, unlösbare oder nur unter Zerstörung lösbare Verbindung, insbesondere keine chemische Verbindung, miteinander ein. Vielmehr liegen und/oder haften diese vorzugsweise voneinander (insbesondere zerstörungsfrei) lösbar bzw. trennbar oder adhäsiv unmittelbar aneinander an.

Im vorliegenden Fall werden Materialpaarungen bevorzugt, die bei unmittelbarem Kontakt zerstörungsfrei lösbar adhäsiv an einander haften. Dies kann erreicht werden, indem die Materialpaarung des Beutelmaterials 5 und des die Wand 7 bildenden Materials so ausgewählt sind, dass diese Materialien bei der Extrusion keine Mischung bilden oder sich bei Erkalten entmischen. Vorzugsweise handelt es sich bei dem Beutelmaterial 5 und bei dem die Wand 7 bildenden Material um unterschiedliche Thermoplasten, insbesondere unterschiedliche Polyolefine, wie die Materialpaarung PE/PP. Es ist bevorzugt, dass sich die Materialen in ihren Schmelzpunkten unterscheiden, vorzugsweise um mehr als 30 °C, insbesondere mehr als 40 °C oder 50 °C. Es ist bevorzugt, dass die Materialien eine geringe Mischentropie aufweisen, vorzugsweise so dass sie sich, beispielsweise bei unter 100 °C, entmischen. Alternativ oder zusätzlich kann die Eigenadhäsion der jeweiligen Materialien größer sein als die Adhäsion zu einander sein. Die Schälkraft der unmittelbar aneinander angrenzenden Materialien beträgt vorzugsweise weniger als 8 N/100mm, insbesondere weniger als 5 N/100mm.

Ein weiteres Kriterium für die Auswahl einer geeigneten Materialpaarung ist, dass der huggins'sche Wechselwirkungsparameter χ der Materialpaarung (in der Schmelze) geringer ist als der kritische huggins'sche Wechselwirkungsparameter χ_{C}, vorzugsweise um mindestens Faktor 2, 5 oder 10. Der huggins'sche Wechselwirkungsparameter χ beschreibt hierbei auf Basis der Flory-Huggins-Theorie das Haftverhalten aneinander anliegender Polymere.

Alternativ oder zusätzlich können jedoch auch Trennmittel bei der Extrusion zwischen dem Beutelmaterial 5 und dem die Wand 7 bildenden Material eingesetzt werden oder sonstige Maßnahmen getroffen werden, um ein nachträgliches Ablösen des Beutelmaterials 5 von der Wand 7 zu ermöglichen.

Der Behälter 4 weist vorzugsweise eine Entnahmeöffnung 9 zur Entnahme eines innerhalb des Beutels 2 anordenbaren Produkts auf. Insbesondere ist die Entnahmeöffnung 9 durch einen Halsbereich 10 des Behälters 4 gebildet. Der Halsbereich 10 kann einen Kragen zur Anbringung eines Verschlusses oder Adapters, insbesondere mittels einer Quetsch- oder Pressverbindung, aufweisen. Die Entnahmeöffnung 9 ermöglicht den Zugang zur Innenseite des Beutels 2 bzw. des durch das Beutelmaterial 5 umschlossenen Volumens. Im Bereich der Entnahmeöffnung liegt das Beutelmaterial 5 an der Wand 7 dauerhaft dichtend an. Dies kann durch Verquetschen oder Verpressen erreicht werden.

Der Behälter 4 weist vorzugsweise weiter eine Belüftungsöffnung 11 auf. Diese ist im Darstellungsbeispiel auf einer der Entnahmeöffnung 9 abgewandten oder gegenüberliegenden Seite des Behälters 4 in dem Außenbehälter 8 bzw. dessen Wand 7 vorgesehen, kann grundsätzlich jedoch auch an einer anderen Stelle vorgesehen sein. Die Belüftungsöffnung 11 ermöglicht den Zugang zum Innenraum 3 des Behälters 4 auf der Außenseite bzw. der der Entnahmeseite 12 abgewandten Seite des Beutels 2.

Vorzugsweise ist die Erzeugung der Belüftungsöffnung 11 ein Schritt des Fertigungsverfahrens des Behälters 4, insbesondere wobei dieser Schritt nach dem Abformschritt im Fertigungsverfahren und vor einem Schritt zur (zumindest teilweise) Ablösung des Beutelmaterials 5 von der Wand 7 stattfindet. Vorzugsweise wird der Behälter 4 aus den koaxial angeordneten und/oder koextrudierten, ineinander liegenden Schläuchen mit Hilfe einer vorzugsweise zweiteiligen Form oder Blasform abgeformt. Besonders bevorzugt werden dabei Teile der Form oder Blasform über den Schläuchen derart geschlossen, dass die Schläuche an mindestens einer Stelle zusammen gequetscht werden. Vorzugsweise wird dabei eine nach außen hervorstehende Naht oder Bodennaht ausgebildet, so dass das innenliegende Beutelmaterial 5 miteinander verschweißt bzw. an dieser Stelle aus dem innenliegenden Schlauch ein Beutelverschluss gebildet wird. Auf diese Weise kann aus dem zunächst schlauchartigen Beutelmaterial 5 ein lediglich an der Entnahmeöffnung 9 geöffnetes, vom Beutelmaterial 5 umschlossenes Volumen gebildet werden. Vorzugsweise wird die Belüftungsöffnung 11 im Bereich der Naht oder Bodennaht ausgebildet.

Vorzugsweise wird die Belüftungsöffnung 11 dadurch gebildet, dass die Bodennaht im Anschluss an die Formgebung mindestens teilweise, bevorzugt jedoch nicht vollständig, abgeschnitten wird, so dass wenigstens ein Teilbereich der Naht des Beutels 2 in der Naht der Wand 7 des Behälters 4 fixiert bleibt. Anschließend wird eine radiale, in Nahtrichtung wirkende Kraft im Bodenbereich eingeleitet, so dass die Bodennaht aufbricht. Hierbei ist bevorzugt, dass die Temperatur des Mittels der Blasform hergestellten Formlings beim Abschneiden der Bodennaht zwischen 40° und 70° liegt und der Außenbehälter noch in gewissem Umfang plastisch verformbar ist, so dass die durch die Kraft verursachte Verformung eine bleibende Verformung ist und nicht durch elastische Rückstellung vollständig aufgehoben wird. Das Resultat ist eine aufgebrochene Bodennaht, bei der zwischen dem Beutelmaterial 5 und der Wand 7 die Belüftungsöffnung 11 gebildet ist, wie beispielhaft in Fig. 9 dargestellt.

An der Belüftungsöffnung 11 ist die Wand 7 vorzugsweise von dem Beutelmaterial 5 lösbar oder gelöst und untereinander nicht verbunden, so dass Umgebungsluft zwischen das Beutelmaterial 5 und die Wand 7 dringen kann. Dies ermöglicht unter Ablösung des Beutelmaterials 5 von der Innenseite 6 der Wand 7 einen Druckausgleich. Für Details hinsichtlich der Herstellung der Belüftungsöffnung 11 wird auf die Lehre der WO 01/76849 verwiesen.

Der Innenraum des Behälters 4 weist vorzugsweise eine der Entnahmeöffnung 9 zugeordnete Entnahmeseite 12 und eine der Belüftungsöffnung 11 zugeordnete Belüftungsseite 13 auf, die durch das Beutelmaterial 5 voneinander getrennt sind. Die Entnahmeseite 12 ist also vorzugsweise innerhalb des Beutels oder die Innenseite des Beutels 2 bzw. des durch das Beutelmaterial 5 gebildeten Volumens oder ist hiermit verbunden, während die Belüftungsseite 13 außerhalb des Beutels 2 bzw. des Beutelmaterials 5 bzw. zwischen Beutelmaterial 5 und Wand 7 vorgesehen ist.

Im Darstellungsbeispiel gemäß Fig. 1 ist der Behälter 4 in einer Kammer 14 angeordnet. Die Kammer 14 weist einen Entnahmeöffnungsanschluss 15 auf, über den die Innenseite des Beutels 2 bzw. das durch das Beutelmaterial 5 gebildete Volumen anschließbar ist. Auf diese Weise kann beispielsweise Druckluft eingeleitet oder der Innenraum des Beutels 2 bzw. des durch das Beutelmaterial 5 gebildete Volumens evakuiert werden o. dgl. Insbesondere handelt es sich also um einen fluidischen Anschluss. Der Entnahmeöffnungsanschluss 15 bildet vorzugsweise einen Teil der Entnahmeseite 12, ist dieser zugeordnet oder ermöglicht eine Verbindung mit dieser.

Ferner weist die Kammer 15 vorzugsweise einen Belüftungsöffnungsanschluss 16 auf, der vorzugsweise, insbesondere fluidisch, mit der Belüftungsöffnung 11 kommuniziert. Im Darstellungsbeispiel erfolgt dies über einen Wanddurchbruch in Kombination mit seitlich entlang des Behälters 4 geführten Verbindungskanälen 17. Der Belüftungsöffnungsanschluss 16 kann jedoch auch auf andere Weise fluidisch mit der Belüftungsöffnung 11 verbunden sein. Der Belüftungsöffnungsanschluss 16 ist vorzugsweise mit der Belüftungsseite 13 verbunden oder bildet einen Teil dieser.

Über den Entnahmeöffnungsanschluss 15 kann die Innenseite des Beutels 2 bzw. des durch das Beutelmaterial 5 gebildeten Volumens mit Über- bzw. Unterdruck beaufschlagt werden. Über den Belüftungsöffnungsanschluss 16 kann die Belüftungsseite mit Überdruck oder Unterdruck beaufschlagt werden. Mit anderen Worten ermöglicht der Entnahmeöffnungsanschluss 15 eine Verbindung mit der Entnahmeseite 12 und der Belüftungsöffnungsanschluss 16 eine Verbindung mit der Belüftungsseite 13, vorzugsweise um Druckdifferenzen zwischen der Entnahmeseite 12 und der Belüftungsseite 13 zu erzeugen.

Die Kammer 14 ist vorzugsweise dazu ausgebildet, mit dem Behälter 4 zwei fluidisch voneinander getrennte Bereiche zu bilden, nämlich einen entnahmeseitigen fluidischen Bereich, der fluidisch mit der Entnahmeseite 12 verbunden ist und einen belüftungsseitigen fluidischen Bereich, der fluidisch mit der Belüftungsseite 13 verbunden ist. Diese Bereiche bilden vorzugsweise durch den Beutel 2 bzw. das Beutelmaterial 5 voneinander getrennte Druckbereiche bzw. Druckkreisläufe. Die Anlage 1 weist vorzugsweise Mittel auf, um die Bereiche mit einem vorgegebenen oder vorgebbaren Druck beaufschlagen zu können und/oder zum Druckausgleich mit der Umgebung verbinden zu können. Dies kann durch Pumpen, Ventile und/oder Druckspeicher realisiert sein.

Der Behälter 4 ist vorzugsweise in der Kammer 14 derart abgedichtet eingesetzt, dass die Entnahmeseite 12 von der Belüftungsseite 13 bzw. der Entnahmeöffnungsanschluss 15 von dem Belüftungsöffnungsanschluss 16 bei korrekt ausgebildetem Beutel 2 fluidisch getrennt sind, insbesondere luftdicht oder gasdicht. Hierzu kann eine Dichtung 18 vorgesehen sein, welche den entnahmeseitigen fluidischen Bereich gegenüber dem belüftungsseitigen fluidischen Bereich, insbesondere luftdicht oder gasdicht, abdichtend. Eine solche Dichtung 18 dichtet im Darstellungsbeispiel exemplarisch stirnseitig den Halsbereich 10 des Behälters 4 bzw. den Behälter 4 am Rand der Entnahmeöffnung 9 gegen ein Gehäuse der Kammer 14 ab.

Ferner weist die Anlage 1 vorzugsweise einen tauchrohrartigen Dorn 19 auf, der (entnahmeseitig) in den Beutel 2 bzw. das durch das Beutelmaterial 5 gebildete Volumen eintaucht. Der Dorn hat stirnseitige und/oder seitliche Öffnungen zum Einleiten bzw. Ausleiten von Substanzen, insbesondere Gas oder Druckluft.

Im Darstellungsbeispiel aus Fig. 1 weist die Anlage 1 ferner ein entnahmeseitiges Ventil 20 auf, mit dem ein Zufluss in den Beutel 2 bzw. ein Abfluss aus dem Beutel 2 freigegeben und/oder blockiert werden kann. Der Belüftungsinnenraum bzw. die Entnahmeseite 12 kann somit belüftet werden und/oder auf einen Druck gebracht und/oder (luftdicht) verschlossen werden.

Weiter weist die Anlage 1 vorzugsweise ein belüftungsseitiges Ventil 21 auf, durch das ein Zufluss oder Abfluss auf der Belüftungsseite 13 ermöglicht oder blockiert werden kann. Hierdurch kann die Außenseite des Beutels 2 bzw. die Belüftungsseite 13 belüftet und/oder auf einen Druck gebracht und/oder (luftdicht) verschlossen werden.

Mit der Belüftungsseite 13 ist vorzugsweise ein Drucksensor 22 verbunden. Der Drucksensor 22 ist vorzugsweise dazu ausgebildet und eingerichtet, einen belüftungsseitigen Druck, insbesondere Luftdruck oder Gasdruck, zu messen. Im Darstellungsbeispiel ist der Drucksensor 22 unmittelbar fluidisch mit der Belüftungsseite 13 verbunden. Hier sind jedoch auch andere Lösungen denkbar.

Die vorliegende Erfindung betrifft insbesondere das Ablösen des Beutelmaterials 5 von der Innenseite 6 der Wand 7 des Behälters 4 zur Bildung des Beutels 2.

Ein Beutel 2 im Sinne der vorliegenden Erfindung ist vorzugsweise ein flexibles, besonders bevorzugt kollabierbares Gebilde.

Der Beutel 2 ist vorzugsweise aus Beutelmaterial 5 gebildet. Das Beutelmaterial 5 ist vorzugsweise folienartig.

Das Beutelmaterial 5 ist in einem Ausgangszustand an der Innenseite 6 der Wand 7, insbesondere durch Adhäsion, gehalten. Daher wird von einem Beutel 2 in der Regel erst dann gesprochen, wenn das Beutelmaterial 5 von der Innenseite 6 der Wand 7 abgelöst ist, so dass es sich frei von der Wand 7 entfernen kann. Dies ist der Fall, sobald das Beutelmaterial 5 erstmalig von der Innenseite 6 der Wand 7 gelöst worden ist, da hierdurch die Adhäsion zwischen Wand 7 und Beutelmaterial 5 aufgehoben wird.

Die Anlage 1 weist vorzugsweise eine mit der Entnahmeseite 12 verbindbare Druckeinrichtung 23 und/oder eine mit der Belüftungsseite 13 verbindbare Druckeinrichtung 24 auf. Die Druckeinrichtungen 23, 24 können dazu ausgebildet sein, einen Druck zu ändern, insbesondere zu steigern oder abzusenken. Insbesondere handelt es sich hierbei um einen Luftdruck oder Gasdruck. Die Druckeinrichtungen 23, 24 können also beispielsweise Druckluftquellen sein oder aufweisen. Alternativ oder zusätzlich können die Druckeinrichtungen 23, 24 Vakuumpumpen sein oder aufweisen. Auf diese Weise ermöglichen es die Druckeinrichtungen 23, 24, Druckdifferenzen zwischen der Entnahmeseite 12 und der Belüftungsseite 13 zu erzeugen und/oder zu verändern.

In Fig. 1 sind zusätzlich zu dem an der Wand 7, insbesondere adhäsiv, angelagerte Beutelmaterial 5 teil-abgelöste Varianten des Beutelmaterials 5 gestrichelt dargestellt, wobei die Varianten unterschiedliche Situationen im Verlauf des Ablösevorgangs wiedergeben.

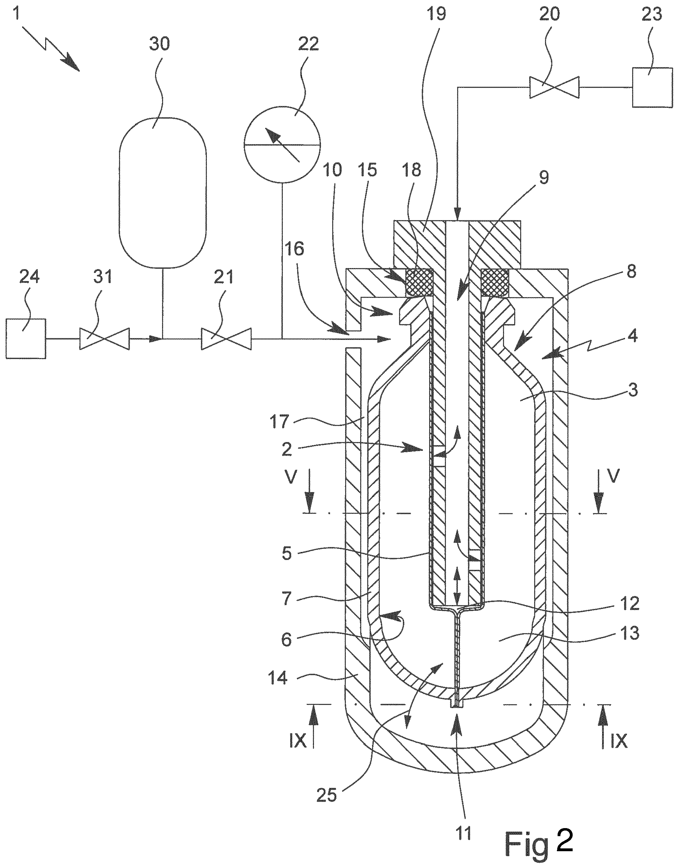

In Fig. 2 ist eine weitere Anlage 1 dargestellt, wobei im Folgenden lediglich auf die Ergänzungen im Hinblick auf die Ausführungsform gemäß Fig. 1 eingegangen wird. Im Übrigen wird auf die Erläuterung im Zusammenhang mit Fig. 1 verwiesen. Zudem sei klarstellend erwähnt, dass die Eigenschaften der Anlage 1 von Fig. 1 auf die der Fig. 2 übertragbar sind.

Die Anlage 1 gemäß Fig. 2 weist ergänzend ein Druckspeichervolumen 30 auf, das getrennt von dem Behälter 4 auf einen Solldruck gebracht werden kann und im Anschluss mit der Belüftungsseite 13 des Behälters 4 fluidisch verbunden werden kann, um einen Druckausgleich zwischen dem Druckspeichervolumen 30 und der Belüftungsseite 13 zu ermöglichen.

Der Drucksensor 22 ist vorzugsweise mit dem resultierenden Gesamtsystem aufweisend das Druckspeichervolumen 30 und die Belüftungsseite 13 verbunden, so dass der Drucksensor 22 den aufgrund des Druckausgleichs resultierenden Druck messen kann.

Gemäß der vorliegenden Erfindung wird, vorzugsweise ebenfalls mit der Anlage gemäß Fig. 1 oder Fig. 2, der Grad der Dichtigkeit des Beutels 2 ermittelt. Hierbei wird vorzugsweise eine Genauigkeit erreicht, um auch Feinlecks, Dünnstellen o. dgl. zu ermitteln, um eine spätere Zuverlässigkeit gewährleisten zu können.

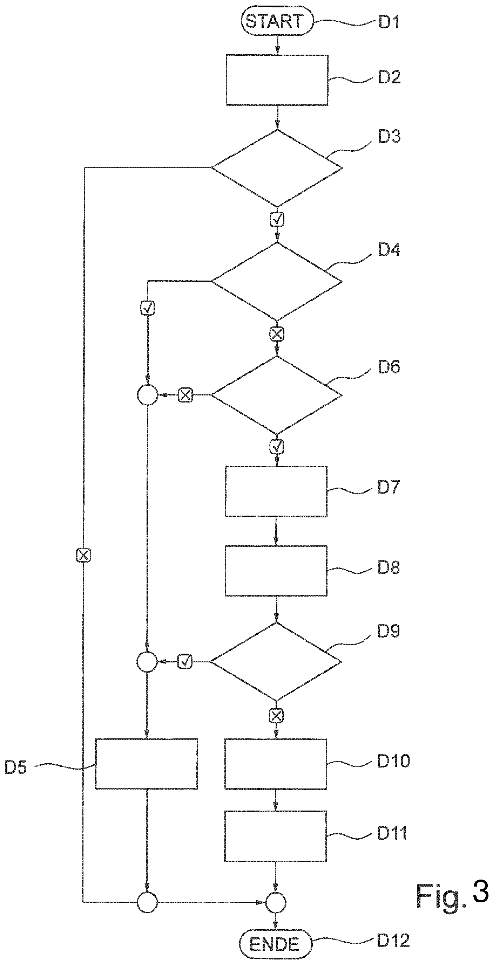

In Fig. 3 ist ein schematisches Blockschaltbild dargestellt, anhand dessen eine bevorzugte Dichtigkeitsprüfung näher erläutert wird.

Das Verfahren startet vorzugsweise in Schritt D1, worauf im Schritt D2 ein Verschließen der Kammer 14 bei eingesetztem Behälter 4 erfolgt. In Schritt D3 wird vorzugsweise kontrolliert, ob ein Behälter 4 in die Kammer 14 eingesetzt ist.

In Schritt D4 wird vorzugsweise ermittelt, ob bereits bei einem vorherigen, beispielsweise dem Ablöseverfahren, ein Grobleck identifiziert worden ist. Bei Identifikation eines Groblecks wird in Schritt D5 vorzugsweise die Prüfung abgebrochen. In Schritt D6 wird vorzugsweise überprüft, ob ein ausreichender Ablösegrad erreicht worden ist. Insbesondere wird hierbei überprüft, ob nach dem Druckausgleich der resultierende Druck niedrig genug ist, also ein Schwellwert unterschreitet. Wenn dies nicht der Fall ist, wird die Prüfung ebenfalls mit Schritt D5 abgebrochen.

Die Schritte D1 bis D6 sind vorzugsweise optional und müssen nicht sämtlichst durchgeführt werden. Die Dichtigkeitsprüfung kann insbesondere auch ohne die Schritte D1 bis D6 erfolgen.

Das vorschlagsgemäße Verfahren zur Prüfung der Dichtigkeit startet mit Schritt D7. In Schritt D8 wird zunächst nach groberen Lecks gesucht. Hierzu ist es bevorzugt, dass die Belüftungsseite 13 auf Unterdruck gebracht bzw. evakuiert wird, beispielsweise mittels der belüftungsseitigen Druckeinrichtung 24. Das Druckspeichervolumen 30 wird in diesem Zusammenhang nicht benötigt, kann mittels eines Ventils (nicht dargestellt) abgeschottet oder es kann eine Anlage 1 gemäß Fig. 1 verwendet werden.

Zur Dichtigkeitsprüfung wird im Anschluss das belüftungsseitige Ventil 21 geschlossen. Mit dem Drucksensor 22 kann dann eine Verschlechterung des Vakuums bzw. ein Druckanstieg ermittelt werden, der zu einem Grad der Undichtigkeit des Beutels 2 korrespondiert.

In Schritt D8 erfolgt nach kurzer Wartezeit zur Vermeidung von Messungenauigkeiten eine sogenannte Grobleckauswertung, bei der der Druckverlauf des Vakuums auf stärkere Druckanstiege hin untersucht wird. Wird in Schritt D9 bei Auswertung des gemessenen Druckanstiegs ein gröberes Leck identifiziert, wird die Prüfung gemäß Schritt D5 abgebrochen.

Wenn ein Grobleck nicht identifiziert wird, folgt eine sogenannte Feinleckauswertung in Schritt D10, wobei nach einer vorgegebenen Warteperiode ein Druckanstieg mit dem Drucksensor 22 ermittelt wird. Wenn der Druckanstieg einen gewissen Schwellwert überschreitet, wird eine mangelnde Dichtigkeit festgestellt und der Behälter 4, vorzugsweise automatisch, verworfen, aussortiert, entsorgt o. dgl.

Falls der Druckanstieg unterhalb des vorgegebenen Schwellwerts liegt, hat der Behälter 4 den Test bestanden, also einen ausreichenden Grad an Dichtigkeit. Das Verfahren wird dann mit einer Belüftung der Belüftungsseite 13 und ggf. Entlüftung der Entnahmeseite 12, Öffnen der Kammer 14 und/oder Auswurf des Behälters 4 in Schritt D11 abgeschlossen und dann in Schritt D12 beendet.

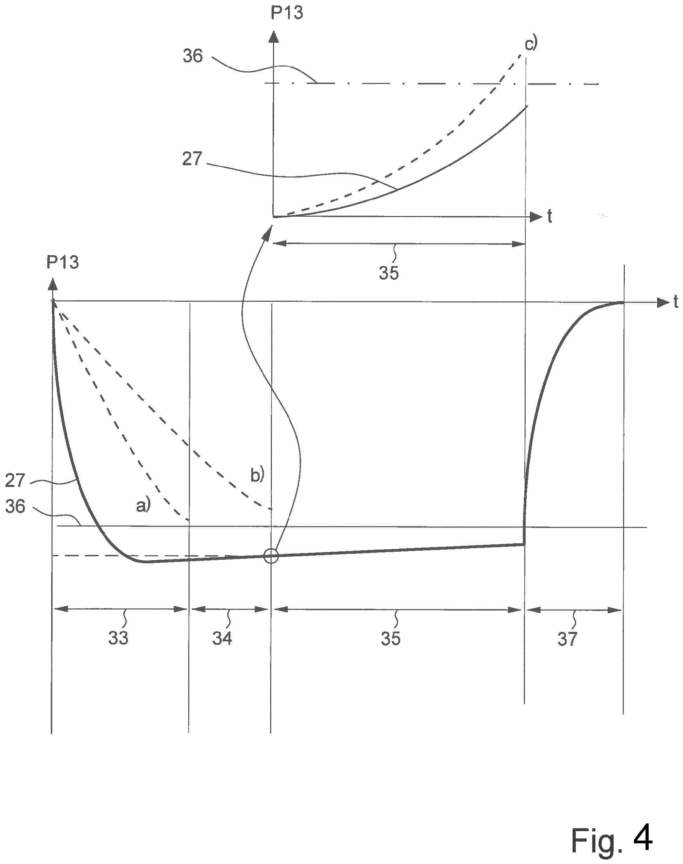

In Fig. 4 ist ein entsprechender Druckverlauf des belüftungsseitigen Drucks P13 für die Dichtigkeitsprüfung und darüber ein in Bezug auf die den belüftungsseitigen Druck 13 repräsentierende Y-Achse vergrößerter Ausschnitt dargestellt. Im unteren Diagramm entspricht die eingezeichnete X-Achse der Zeit t und schneidet die den belüftungsseitigen Druck P13 repräsentierende Y-Achse im Null-Punkt bzw. bei Umgebungsdruck.

In einem ersten Abschnitt 33 wird die Prüfung vorbereitet, indem die Belüftungsseite 13 evakuiert bzw. ein Unterdruck erzeugt wird, insbesondere durch Abpumpen von Luft. Der belüftungsseitige Druck P13 fällt hierbei mit einer abnehmenden Geschwindigkeit und geht mit der Zeit in einen asymptotischen Verlauf über und erreicht ein absolutes Minimum. Anschließend wird die evakuierte bzw. unter Unterdruck gesetzte Belüftungsseite 13 verschlossen. Die Entnahmeseite 12 hat vorzugsweise Umgebungsdruck oder Überdruck gegenüber der Belüftungsseite 13 bzw. der Umgebung.

Wenn in diesem Abschnitt 33 kein ausreichendes Vakuum bzw. kein ausreichender Unterdruck erzeugt werden kann bzw. der erzeugbare Unterdruck eine Schwelle nicht erreicht, im Darstellungsbeispiel gemäß Fig. 4 gestrichelt angedeutet, wird vorzugsweise ein Grobleck detektiert (vgl. auch die Diskussion zu den Schritten D8 und D9 aus Fig. 3). In diesem Fall kann die Messung abgebrochen und der betroffene Behälter 4 verworfen werden.

Wenn im ersten Abschnitt 33 ein ausreichendes bzw. vorgegebenes Vakuum bzw. ein vorgegebener Unterdruck erreicht wird, wird optional zunächst im zweiten Abschnitt 34 eine Karenzzeit eingehalten. In dieser Karenzzeit ändert sich der belüftungsseitige Druck P13 nur geringfügig bzw. pendelt sich ein. Im Darstellungsbeispiel steigt der belüftungsseitige Druck P13 beispielsweise durch Undichtigkeiten der Anlage 1 geringfügig.

Im Anschluss wird in einem dritten Abschnitt 35 die eigentliche Messung durchgeführt, die der Feinleckbestimmung, wie im Zusammenhang mit Schritt D10 aus Fig. 3 erläutert, entspricht. In diesem Abschnitt steigt der belüftungsseitige Druck jedenfalls bedingt durch Undichtigkeiten der Anlage 1 weiter an. Der Grad und/oder die Geschwindigkeit dieses Druckanstiegs ist erhöht, wenn zusätzlich zu Undichtigkeiten der Anlage 1 der Beutel 2 Undichtigkeiten aufweist. Bei Undichtigkeiten kann es sich um Löcher oder um Dünnstellen handeln, die keine ausreichende Diffusionsbarriere bilden.

In der oberen Grafik aus Fig. 4 ist mit vergrößerter Y-Achse dieser dritte Abschnitt 35 dargestellt, wobei ein Schwellwert 36 mittels einer strichpunktierten Linie angedeutet ist und die X-Achse als Zeitachse die den belüftungsseitigen Druck P13 repräsentierende Y-Achse bei dem belüftungsseitigen Druck P13 zum Start des dritten Abschnitts 35 schneidet. Dies erfolgt aus Gründen der besseren Anschaulichkeit, kann jedoch auch dem Vorgehen zur Detektion von Feinlecks entsprechen, da für die Bestimmung von Feinlecks vorzugsweise eine Druckdifferenz zwischen Start und Endzeitpunkt des dritten Abschnitts 35 verwendet wird.

In einer Variante wird der Schwellwert 36 in Abhängigkeit von dem belüftungsseitigen Druck P13 zum Start des dritten Abschnitts 35 festgelegt, wobei der Schwellwert 36 um eine aufgrund von Undichtigkeiten zu erwartenden Druckanstieg zuzüglich eines Toleranzwerts oberhalb des belüftungsseitigen Drucks P13 zum Start des dritten Abschnitts 35 angesetzt wird. Es handelt sich also um einen variablen Schwellwert 36 bezogen auf den absoluten Druck bzw. um einen, insbesondere festen, vorgegebenen oder vorgebbaren Schwellwert 36, der auf die Differenz des belüftungsseitigen Drucks P13 zwischen Beginn und Ende der Messung bzw. des dritten Abschnitts 35 bezogen ist.

Am Ende der Messung bzw. des dritten Abschnitts 35 bzw. nach einer vorgegebenen Wartezeit kann der Anstieg des belüftungsseitigen Drucks P13 als Druckdifferenz ermittelt und, vorzugsweise, mit dem Schwellwert 36 verglichen werden.

Alternativ oder zusätzlich kann der Schwellwert 36 auch als absoluter belüftungsseitiger Druck P13 vorgegeben werden. Hierbei wird der Schwellwert 36 vorzugsweise um einen aufgrund von Undichtigkeiten zu erwartenden Druckanstieg zuzüglich eines Toleranzwerts oberhalb eines mindestens zu erreichenden Unterdrucks angesetzt. Wenn beispielsweise im ersten Abschnitt 33 ein Unterdruck von mindestens einem Zielwert, beispielhaft 60 kPa, erreichen soll, kann der Schwellwert 36 bei einem Unterdruck über diesem Zielwert, beispielsweise von 40 bis 300 Pa über dem Zielwert angesetzt werden.

Wenn die Druckdifferenz bzw. der belüftungsseitige Druck P13 den Schwellwert 36 überschreitet, in der oberen Grafik als Kurve c) gestrichelt angedeutet, gilt ein Feinleck als detektiert. Der Behälter 4 wird daraufhin vorzugsweise aussortiert bzw. verworfen. Wenn die Undichtigkeit hingegen so gering ist, dass sie den üblichen Undichtigkeiten der Anlage 1 entspricht, in der oberen Grafik mit der durchgezogenen Linie angedeutet, bzw. wenn der Schwellwert 36 nicht erreicht oder überschritten wrid, wird die Dichtigkeitsprüfung als bestanden angenommen.

Im Folgenden, vierten Abschnitt 37, wird die Belüftungsseite 13 vorzugsweise wieder belüftet (auf Normaldruck gebracht) und das Verfahren abgeschlossen. Hierbei kann die Belüftungsseite 13 mit der Umgebung verbunden werden, was zu einem asymptotischen Druckabfall auf Umgebungsdruckniveaus führt, wie in Fig. 4 exemplarisch dargestellt.

Die Dauer des dritten Abschnitts 35 entspricht vorzugsweise mehr als 0,5 s, insbesondere mehr als 1 s und/oder weniger als 5 s, vorzugsweise weniger als 4 oder 3 s. Hierdurch kann eine ausreichende Genauigkeit bei gleichzeitig schneller Durchführung des Tests erreicht werden.

Der Schwellwert 36 hängt vorzugsweise von einer Dichtigkeit des Gesamtsystems bzw. der Anlage 1 ab. Dieser kann beispielsweise bei einigen 10 oder wenigen 100 Pa über dem belüftungsseitigen Druck P13 zu Beginn der Messung bzw. zu Beginn des Abschnitts 35 liegen, bevorzugt mehr als 60 Pa oder 80 Pa und/oder weniger als 200 Pa, vorzugsweise weniger als 150 Pa oder 120 Pa.

Besonders bevorzugt erfolgen eine Ablösung des Beutelmaterials 5 und/oder eine Ermittlung des Ablösegrads und die Dichtigkeitsprüfung unmittelbar aufeinander folgend, insbesondere ohne Austausch oder Wechsel des Behälters 4, mit derselben Kammer 14 und/oder kontinuierlich. Hierbei ist es möglich, dass einige der zuvor erläuterten Schritte weggelassen werden.

Das Verfahren zur Dichtigkeitsprüfung wird jedenfalls im Umfang des Schritts D10, vorzugsweise der Schritte D8 bis D10 durchgeführt.

Die vorschlagsgemäße Anlage 1 ist vorzugsweise zur Durchführung des Verfahrens gemäß der vorliegenden Erfindung ausgebildet. Hierbei kann die Anlage 1 eine oder mehrere Kammern 14 aufweisen. Das Verfahren kann also in einer Kammer 14 oder in zwei oder mehr Kammern 14 durchgeführt werden. Auf diese Weise können mit derselben Anlage 1 mehrere Behälter 4 gleichzeitig dem oder den vorschlagsgemäßen Verfahren zugeführt werden. Durch diese Parallelisierung kann der Gesamtdurchsatz vergrößert werden.

Das Verfahren zur Bestimmung des Grads der Dichtigkeit vorzugsweise nach einer Bildung des Beutels 2 und/oder einer Ermittlung des Ablösegrads durchgeführt.

In einem weiteren Aspekt betrifft die vorliegende Erfindung ferner ein Computerprogrammprodukt bzw. ein computerlesbares Speichermedium mit Programmcodemitteln, die dazu ausgebildet sind, wenn sie ausgeführt werden, insbesondere auf einem Prozessor, Computer, Steuergerät o. dgl., ein Verfahren gemäß der vorliegenden Erfindung auszuführen. Die Anlage 1 kann und/oder die Komponenten der Anlage 1 können hierzu ein Steuergerät (nicht dargestellt) aufweisen, das dieses Computerprogrammprodukt enthält oder ausführen kann, wodurch die Anlage 1 in der beschriebenen Weise betreibbar wird. Insbesondere werden die Ventile 20, 21, 31 und/oder die Druckeinrichtungen 23, 24 in entsprechender Weise angesteuert.

Ein weiterer Aspekt der vorliegenden Erfindung betrifft die Verwendung der Anlage 1 zur Prüfung der Dichtigkeit des Beutels 2 bzw. des Beutelmaterials 5 im Hinblick auf eine Abdichtung, insbesondere im Hinblick auf eine luftdichte Abdichtung, der Entnahmeseite 12 gegenüber der Belüftungsseite 13 oder umgekehrt.

Die vorliegende Erfindung betrifft in einem weiteren den Test des Beutels 2 Behälters 4.

Der Behälter 2 weist die Entnahmeöffnung 9 auf, die Einfüllen eines bevorzugt flüssigen Behälterinhalts in und Entnehmen des Behälterinhalts aus einem durch den Beutel 2 umschlossenen Innenraum 3 ermöglicht.

Der Behälter 4 weist vorzugsweise den zumindest im Wesentlichen formstabilen oder formsteifen Außenbehälter 8 auf, in dem der Beutel 2 angeordnet oder gebildet ist oder wird. Der Außenbehälter 8 ist vorzugsweise ausreichend elastisch, so dass bei Ausüben einer Kraft auf den Außenbehälter 8 eine gewisse reversible Verformung des Außenbehälters 8 möglich ist. Dies kann dadurch erreicht werden, dass der Außenbehälter 8 aus einem, insbesondere im Vergleich zum Beutelmaterial 5 dickwandigeren, Kunststoff besteht, beispielsweise Polyethylen oder Polypropylen. Der Außenbehälter 8 hat vorzugsweise eine ausreichende Elastizität, um zu einem gewissen Grad reversibel verformbar zu sein, bei gleichzeitig dauerhaft formgebender Stabilität, um die Verformung selbständig zumindest im Wesentlichen in den ursprungszustand rückstellen zu können, beispielsweise wie bei einer PET Getränkeflasche o. dgl. Der Beutel 2 ist innerhalb des Außenbehälters 8 angeordnet und steht mit dem späteren Behälterinhalt in Kontakt, indem der Beutel 2 den Behälterinhalt durch die Entnahmeöffnung 9 aufnimmt.

Der innenliegende Beutel 2 und der Außenbehälter 8 sind vorzugsweise aus jeweils verschiedenartigen, keine Verbindung miteinander eingehenden, thermoplastischen Kunststoffen gebildet.

Das den Beutel 2 bildende Beutelmaterial 5 kann, vorzugsweise durch Druckausgleich unter Kollabieren des Beutels 2, einen zwischen Außenbehälter 8 und Beutel 2 bestehenden Druckunterschied mittels der in dem Außenbehälter 8 angeordneten Belüftungsöffnung 11 ausgleichen.

Zur Herstellung des Behälters 4 ist bevorzugt, dass zunächst ein Vorformling, bestehend aus zwei koaxialen Schläuchen, die eine für die Herstellung des Behälters ausreichende Länge aufweisen, im Koextrusionsblasverfahren zwischen geöffneten Hälften einer Blasform erzeugt wird. Die Hälften der Blasform werden geschlossen (und dadurch die Blasform gebildet) und dabei wird unter Ausbildung einer nach Außen hervorstehenden Bodennaht das Überschussmaterial im Bodenbereich des herzustellenden Behälters 4 abgequetscht. Dies erfolgt in der Art, dass im Nahtbereich das in Kontakt befindliche Material des Außenbehälters 8 miteinander verschweißt wird, dass zwischen den Wandabschnitten des Außenbehälters 8 der den Beutel 2 bildende Schlauch eingeklemmt, axial fixiert und verschweißt wird, und der Beutel 2 so mit Druck beaufschlagt wird, dass der Vorformling sich mit seinen Wandungen von innen an die Kontur der Blasform anlegt.

Bei dem Schließen der Blasform und der damit verbundenen Ausbildung der Bodennaht wird die Naht des Beutels 2 vorzugsweise axial in der Naht des Außenbehälters 8 zumindest in Teilbereichen fixiert. Besonders bevorzugt wird oder ist mindestens eine Belüftungsöffnung 11 dadurch gebildet, dass die Bodennaht im Anschluss an die Formgebung mindestens teilweise, bevorzugt jedoch nicht vollständig abgeschnitten wird, so dass wenigstens ein Teilbereich der Naht des Beutels 2 in der Naht des Außenbehälters 8 fixiert bleibt.

Anschließend kann eine radiale, in Nahtrichtung wirkende Kraft im Bodenbereich des Behälters 4 bzw. des Außenbehälters 8 eingeleitet werden, bevorzugt in der Art, dass die Bodennaht des Außenbehälters 8 aufbricht und dadurch eine längliche, insbesondere schlitzartige Belüftungsöffnung 11 bildet, die ein Einströmen von Umgebungsluft zwischen den Beutel 2 bzw. des Beutelmaterials 5 und den Außenbehälter 8 zum Druckausgleich ermöglicht.

Die Temperatur des Vorformlings ist beim Abschneiden der Bodennaht vorzugsweise zwischen 40 °C und 70 °C und/oder der Außenbehälter 8 ist noch in gewissem Umfang plastisch verformbar, so dass die durch die Kraft verursachte Verformung jedenfalls teilweise eine bleibende Verformung ist und nicht durch elastische Rückstellung aufgehoben wird.

Die aus verschiedenen, thermoplastischen Kunststoffen bestehenden Wände des Beutels 2 und Außenbehälters 8 gehen im allgemeinen keine Schweißverbindung miteinander ein. Unter der beim Abquetschen des Überschussmaterials durch die Blasformhälften eingeleiteten Kraft werden einerseits die Wandungen des Beutels 2 und andererseits die Wandungen 7 des Außenbehälters 8 jeweils miteinander verschweißt. Zusätzlich kommt es in Bereichen der Bodennaht zu einer Adhäsion zwischen den Wandungen von Beutel 2 und Außenbehälter 8. Dies ist ein wesentlicher Vorteil des Verfahrens im Hinblick auf die Fixierung des Beutels 2 im Bodenbereich.

Dabei ist die Adhäsion derart, dass mit dem Aufbrechen der Bodennaht des Außenbehälters 8 eine der beiden Nahtseiten mit der Naht des Beutels 2 verbunden bleibt, während die andere Nahtseite des Außenbehälters 8 nicht mit der Naht des Beutels 2 fixiert bleibt. Dadurch wird trotz des Aufbrechens die axiale Fixierung des Beutels 2 gewährleistet, selbst in Ausführungsformen, bei denen die Naht des Außenbehälters 8 über die gesamte Länge aufgebrochen wird. Dies ermöglicht zudem im Folgenden die Bildung des streifenartigen Abschnitts bzw. der Reststreifenbreite 32.

Eine Fixierung des Beutels 2 ist von besonderer Bedeutung in den Anwendungsfällen, in denen eine Kanüle oder ein Tauchrohr in den Behälter 4 eingeführt wird und ein Ablösen des Beutels 2 vom Bodenbereich zu einer Beschädigung bzw. zu einem Verstopfen der Kanüle fuhren würde. Eine Beschädigung des Beutels 2 ist ausgeschlossen, da die Bodennaht nur teilweise abgeschnitten wird und somit der Beutel 2 auch nach Durchführung des Schneidvorganges durch die verbleibende Schweißnaht am Beutel 2 fest verschlossen ist. Die Ausbildung der Belüftungsöffnung 11 wird bevorzugt nicht direkt durch den Schneidvorgang erzeugt, sondern durch Einleiten der Kraft und Aufbrechen der Naht. Hierdurch kann auch die schlitzartige Belüftungsöffnung 11 gebildet sein, die im Folgenden durch Angreifen einer bevorzugt radialen Kraft zum Zwecke des Ablösens des Beutelmaterials 5 oder zum Test aufgespreizt werden kann.

Der Behälter 4, der aus einem Außenbehälter 8 und einem Beutel 2 besteht, ist im vorliegenden Ausführungsbeispiel flaschenförmig ausgebildet. Er weist an seinem Halsbereich 10 einen Vorsprung aus, der an dem Ende des Flaschenhalses bzw. Halsbereichs 10 angeordnet ist, an dem sich die Entnahmeöffnung 9 befindet. Im Bodenbereich 4 des Behälters 1 ist in der Verlängerung einer Behältermittelachse die Bodennaht angeordnet, die die Belüftungsöffnung 11 in der Wand 7 des Außenbehälters 8 bildet. Der Vorsprung ist im Darstellungsbeispiel ausschließlich aus Material des Außenbehälters 8 geformt.

Der Halsbereich 10 weist auf seiner zur Entnahmeöffnung 9 hin gerichteten Stirnfläche vorzugsweise einen insbesondere rechteckförmigen Vorsprung auf. Dieser weist die Besonderheit auf, dass er sowohl aus Material des Außenbehälters 8 als auch aus Material des Beutels 2 geformt ist, so dass der Beutel 2 im Bereich des Flaschenhalses 6 fixiert ist.

Der Behälter 4 ist vorzugsweise zur Verwendbarkeit im pharmazeutischen Bereich ausgebildet. Insbesondere ist der Behälter 4 sterilisierbar. Der Behälter 4 ist vorzugsweise dazu ausgebildet, eine, insbesondere flüssige, Arzneimittelformulierung aufzunehmen oder enthält diese, besonders bevorzugt auf der Entnahmeseite 13. Die Arzneimittelformulierung ist vorzugsweise wirkstoffhaltig bzw. weist einen pharmazeutisch wirksamen Stoff auf. Es kann sich hierbei um eine saure Lösung handeln. Die Arzneimittelformulierung kann Stabilisierungsmittel wie Benzalkoniumchlorid aufweisen. Der Behälter 4 kann jedoch auch für andere Zwecke eingesetzt werden oder einsetzbar sein.

**Bezugszeichenliste:**

| | | | |
|---|---|---|---|
| 1 | Anlage | 35 | dritter Abschnitt |
| 2 | Beutel | 36 | Schwellwert |
| 3 | Innenraum | 37 | vierter Abschnitt |
| 4 | Behälter | | |
| 5 | Beutelmaterial | | |
| 6 | Innenseite | | |
| 7 | Wand | | |
| 8 | Außenbehälter | | |
| 9 | Entnahmeöffnung | | |
| 10 | Halsbereich | | |
| 11 | Belüftungsöffnung | | |
| 12 | Entnahmeseite | | |
| 13 | Belüftungsseite | | |
| 14 | Kammer | | |
| 15 | Entnahmeöffnungsanschluss | | |
| 16 | Belüftungsöffnungsanschluss | | |
| 17 | Kanal | | |
| 18 | Dichtung | | |
| 19 | Dorn | | |
| 20 | Entnahmeseitiges Ventil | D1 | Start des Verfahrens |
| 21 | Belüftungsseitiges Ventil | D2 | Verschließung der Kammer |
| 22 | Drucksensor | D3 | Einsatzprüfung |
| 23 | Entnahmeseitige Druckeinrichtung | D4 | Grobleck-Prüfung |
| 24 | Belüftungsseitige Druckeinrichtung | D5 | Grobleck-Abbruch |
| 25 | Differenzdruck | D6 | Ablösegrad-Prüfung |
| | | D7 | Start der Dichtigkeitsprüfung |
| | | D8 | Wartezeit |
| 27 | Belüftungsseitiger Druckverlauf | D9 | Grobleck-Identifizierung |
| | | D10 | Feinleckauswertung |
| | | D11 | Auswurf des Behälters |
| 30 | Druckspeichervolumen | D12 | Beendigung des Verfahrens |
| 31 | Füllventil | | |
| 32 | Reststreifenbreite | | |
| 33 | erster Abschnitt | | |
| 34 | zweiter Abschnitt | P13 | Belüftungsseitiger Druck |

## Patentansprüche

1. Verfahren zur Dichtigkeitsprüfung eines in einem Behälter (4) vorgesehenen Beutels (2) mit einer Anlage (1), wobei die Anlage (1) eine Kammer (14) aufweist, in die der Behälter (4) eingesetzt ist, wobei der Behälter (4) eine Entnahmeöffnung (9) und eine Belüftungsöffnung (11) aufweist, wobei der Innenraum des Behälters (4) eine der Entnahmeöffnung (9) zugeordnete Entnahmeseite (12) und eine der Belüftungsöffnung (11) zugeordnete Belüftungsseite (13) aufweist, die durch den Beutel (2) voneinander getrennt sind, wobei die Kammer (14) die Entnahmeseite (12) und die Belüftungsseite (13) fluidisch getrennt voneinander dicht anbindet und im Bereich der Entnahmeöffnung (9) der Beutel (2) dauerhaft dichtend am Behälter (4) anliegt, wobei mit der Anlage (1) die Entnahmeseite (12) im Vergleich zur Belüftungsseite (13) mit Überdruck beaufschlagt wird, so dass sich der Beutel (2) an die Wand (7) des Behälters (4) anlegt,
**dadurch gekennzeichnet,**
**dass** mit der oder durch die Belüftungsseite (13) ein abgeschlossenes Prüfvolumen erzeugt wird, in dem ein Druck oder eine Druckdifferenz nach oder in Abhängigkeit von einer Testdauer ermittelt wird, der oder die als Indikator für den Grad der Dichtigkeit des in dem Behälter (4) vorgesehenen Beutels (2) verwendet wird.

2. Verfahren nach Anspruch 1, **dadurch gekennzeichnet, dass** in einem ersten Abschnitt (33) die Prüfung vorbereitet wird, indem auf der Belüftungsseite (13) ein Unterdruck erzeugt wird, insbesondere wobei ein Grobleck detektiert wird, wenn der erzeugbare Unterdruck eine Schwelle nicht erreicht.

3. Verfahren nach Anspruch 2, **dadurch gekennzeichnet, dass** in einem zweiten Abschnitt (34) eine Karenzzeit eingehalten wird, wenn im ersten Abschnitt (33) ein vorgegebener Unterdruck erreicht wird.

4. Verfahren nach einem der Ansprüche 1 bis 3, **dadurch gekennzeichnet, dass** in einem dritten Abschnitt (35) eine Messung, insbesondere Feinleckbestimmung, durchgeführt wird, wobei am Ende des dritten Abschnitts (35) und/oder der Messung ein Anstieg des belüftungsseitigen Drucks als Druckdifferenz (P13) ermittelt und vorzugsweise mit einem Schwellwert (36) verglichen wird.

5. Verfahren nach Anspruch 4, **dadurch gekennzeichnet, dass** der Schwellwert (36) in Abhängigkeit von dem belüftungsseitigen Druck (P13) zum Start des dritten Abschnitts (35) festgelegt wird, wobei der Schwellwert (36) um einen aufgrund von Undichtigkeiten zu erwartenden Druckanstieg zuzüglich eines Toleranzwerts oberhalb des belüftungsseitigen Drucks (P13) zum Start des dritten Abschnitts (35) angesetzt wird, oder
dass der Schwellwert (36) als absoluter belüftungsseitiger Druck (P13) vorgegeben wird, wobei der Schwellwert (36) um einen aufgrund von Undichtigkeiten zu erwartenden Druckanstieg zuzüglich eines Toleranzwerts oberhalb eines mindestens zu erreichenden Unterdrucks angesetzt wird.

6. Verfahren nach einem Anspruch 4 oder 5, **dadurch gekennzeichnet, dass** die Dauer des dritten Abschnitts (35) vorzugsweise mehr als 0,5 s, insbesondere mehr als 1 s, und/oder weniger als 5 s, vorzugsweise weniger als 4 oder 3 s, beträgt.

7. Verfahren nach einem der voranstehenden Ansprüche, **dadurch gekennzeichnet, dass**, insbesondere nach kurzer Wartezeit zur Vermeidung von Messungenauigkeiten, eine Grobleckauswertung erfolgt, bei der der Druckverlauf des Vakuums auf stärkere Druckanstiege hin untersucht wird, vorzugsweise wobei die Dichtigkeitsprüfung abgebrochen wird, wenn bei Auswertung des gemessenen Druckanstiegs ein gröberes Leck identifiziert wird.

8. Verfahren nach einem der voranstehenden Ansprüche, **dadurch gekennzeichnet, dass** eine Feinleckauswertung erfolgt, wobei nach einer vorgegebenen Warteperiode ein Druckanstieg mit einem Drucksensor (22) ermittelt wird, vorzugsweise wobei, wenn der Druckanstieg einen gewissen Schwellwert überschreitet, eine mangelnde Dichtigkeit festgestellt wird und der Behälter (4), bevorzugt automatisch, verworfen, aussortiert oder entsorgt wird.

9. Verfahren nach einem der voranstehenden Ansprüche, **dadurch gekennzeichnet, dass** ermittelt wird, ob bereits bei einem vorherigen Verfahren, insbesondere einem Ablöseverfahren, ein Grobleck identifiziert worden ist, vorzugsweise wobei die Dichtigkeitsprüfung bei Identifikation eines Groblecks abgebrochen wird.

10. Anlage (1), vorzugsweise ausgebildet zur Durchführung eines Verfahrens nach einem der voranstehenden Ansprüche, wobei die Anlage (1) eine Kammer (14) aufweist, in die ein Behälter (4) eingesetzt ist, wobei der Behälter (4) eine Entnahmeöffnung (9) und eine Belüftungsöffnung (11) und der Innenraum des Behälters (4) eine der Entnahmeöffnung (9) zugeordnete Entnahmeseite (12) und eine der Belüftungsöffnung (11) zugeordnete Belüftungsseite (13) aufweist, die durch das Beutelmaterial (5) voneinander getrennt sind, wobei die Kammer (14) die Entnahmeseite (12) und die Belüftungsseite (13) fluidisch getrennt voneinander dicht anbindet und im Bereich der Entnahmeöffnung (9) der Beutel (2) dauerhaft dichtend am Behälter (4) anliegt, wobei die Anlage (1) zur Dichtigkeitsprüfung von in Behältern (4) vorgesehenen Beuteln (2) mittels eines Differenzdrucks (25) zwischen der Entnahmeseite (12) und der Belüftungsseite (13) ausgebildet ist,
**dadurch gekennzeichnet, dass**
die Anlage (1) einen Drucksensor (22) und eine mit dem Drucksensor (22) verbundene Auswerteeinrichtung aufweist, die dazu ausgebildet ist, eine Änderung eines Drucks auf der Belüftungsseite (13) zu messen und die Änderung mit einem Schwellwert (36) zu vergleichen, und wobei die Anlage (1) dazu ausgebildet ist, die Entnahmeseite (12) im Vergleich zur Belüftungsseite (13) mit Überdruck zu beaufschlagen, so dass sich der Beutel (2) an die Wand (7) des Behälters (4) anlegt.

11. Anlage nach Anspruch 10, **dadurch gekennzeichnet, dass** die Anlage (1) ein Druckspeichervolumen (30) aufweist und dazu ausgebildet ist, das Druckspeichervolumen (30) auf einen Druck zu bringen, der sich von dem Druck der Belüftungsseite (13) unterscheidet, und wobei die Anlage (1) ein Ventil (21) aufweist, das das Druckspeichervolumen (30) mittels der Kammer (14) mit der Belüftungsseite (13) verbindet, und dass die Anlage (1) einen Drucksensor (22) zur Ermittlung einer Druckänderung bei Herstellung der Verbindung aufweist.

12. Anlage nach Anspruch 10 oder 11, **dadurch gekennzeichnet, dass** die Anlage (1) einen oder mehrere Behälter (4) aufweist, vorzugsweise wobei eine Außenseite einer Wand (7) des Behälters (4) mit einer Innenwand der Kammer (14) korrespondiert, insbesondere wobei die Anlage (1) dazu ausgebildet ist, einen in die Kammer (14) aufgenommen Behälter (4) dicht anzubinden, so dass die Entnahmeseite (12) und die Belüftungsseite (13) mittels des Beutels (2) voneinander getrennt sind.

13. Anlage nach einem der Ansprüche 10 bis 12, **dadurch gekennzeichnet, dass** die Anlage (1) dazu ausgebildet ist, Behälter (4) aufeinander folgend in die Kammer (14) einzulegen und nach der Dichtigkeitsprüfung solche Behälter (4) auszusortieren, die eine vorgegebene Dichtigkeit nicht erreichen.

14. Computerprogrammprodukt, insbesondere zum Betrieb einer Anlage (1) gemäß einem der Ansprüche 10 bis 13, mit Programmcodemitteln,
**dadurch gekennzeichnet,**
**dass** die Programmcodemittel, wenn sie ausgeführt werden, ein Verfahren nach einem der Ansprüche 1 bis 9 ausführen, vorzugsweise mit der Anlage (1) gemäß einem der Ansprüche 10 bis 13.

15. Verwendung einer Anlage (1) gemäß einem der Ansprüche 10 bis 13 zur Prüfung eines Behälters (4) mit innenliegendem Beutel (2) gemäß einem der Ansprüche 1 bis 9.

## Claims

1. A method for leak testing of a bag (2) provided in a container (4) by means of a system (1), wherein the system (1) has a chamber (14) into which the container (4) is inserted, wherein the container (4) has a withdrawal opening (9) and a ventilation opening (11), wherein the interior of the container (4) has one withdrawal side (12) associated with the withdrawal opening (9) and one ventilation side (13) associated with the ventilation opening (11), which are separated from each other by the bag (2), wherein the chamber (14) connects the withdrawal side (12) and the ventilation side (13) in a sealed manner, fluidically separated from each other, and in the region of the withdrawal opening (9) the bag (2) is permanently in sealed contact with the container (4),
wherein by means of the system (1) the withdrawal side (12) in comparison to the ventilation side (13) is subjected to positive pressure so that the bag (2) bears against the wall (7) of the container (4),
**characterised in that**
a closed test volume is generated with or by the ventilation side (13), in which a pressure or a pressure difference is determined after or as a function of a test duration, which is used as an indicator of the degree of tightness of the bag (2) provided in the container (4).

2. The method according to claim 1, **characterised in that** in a first section (33) the test is prepared by a negative pressure being generated on the ventilation side (13), in particular wherein a gross leak is detected if the negative pressure that can be generated does not reach a threshold.

3. The method according to claim 2, **characterised in that** in a second section (34) a waiting period is maintained when in the first section (33) a predetermined negative pressure is reached.

4. The method according to one of claims 1 to 3, **characterised in that** in a third section (35) a measurement, in particular a fine leak determination, is performed, wherein at the end of the third section (35) and/or the measurement an increase in the ventilation-side pressure is determined as pressure difference (P13) and preferably compared with a threshold value (36).

5. The method according to claim 4, **characterised in that** the threshold value (36) is established as a function of the ventilation-side pressure (P13) at the start of the third section (35), wherein the threshold value (36) is set above the ventilation-side pressure (P13) by an amount equal to a pressure rise to be expected due to leaks plus a tolerance value at the start of the third section (35), or
**in that** the threshold value (36) is predetermined as an absolute ventilation-side pressure (P13), wherein the threshold value (36) is set above a minimum negative pressure to be achieved by an amount equal to a pressure rise to be expected due to leaks plus a tolerance value.

6. The method according to claim 4 or 5, **characterised in that** the duration of the third section (35) is preferably more than 0.5 s, in particular more than 1 s, and/or less than 5 s, preferably less than 4 or 3 s.

7. The method according to one of the preceding claims, **characterised in that**, in particular after a short waiting time to avoid measurement inaccuracies, a gross leak evaluation takes place in which the pressure profile of the vacuum is examined for stronger pressure rises, preferably wherein the leak test is terminated if, during evaluation of the measured pressure rise, a larger leak is identified.

8. The method according to one of the preceding claims, **characterised in that** a fine leakage evaluation is carried out, wherein after a predetermined waiting period, a pressure rise is determined by a pressure sensor (22), preferably wherein, when the pressure rise exceeds a certain threshold value, a lack of tightness is established and the container (4), preferably automatically, is discarded, rejected or disposed of.

9. The method according to one of the preceding claims, **characterised in that** it is determined whether a gross leak has already been identified in a previous process, in particular a detachment process, preferably wherein the leak test is terminated when a gross leak is identified.

10. A system (1), preferably designed for carrying out a method according to one of the preceding claims, wherein the system (1) has a chamber (14) into which a container (4) is inserted, wherein the container (4) has a withdrawal opening (9) and a ventilation opening (11) and the interior of the container (4) has one withdrawal side (12) associated with the withdrawal opening (9) and one ventilation side (13) associated with the ventilation opening (11), which are separated from each other by the bag material (5), wherein the chamber (14) connects the withdrawal side (12) and the ventilation side (13) in a sealed manner, fluidically separated from each other, and in the region of the withdrawal opening (9) the bag (2) is permanently in sealed contact with the container (4),
wherein the system (1) is designed for leak testing of bags (2) provided in containers (4) by means of a differential pressure (25) between the withdrawal side (12) and the ventilation side (13),
**characterised in that**
the system (1) has a pressure sensor (22) and an evaluation device connected to the pressure sensor (22), which is designed to measure a change in pressure on the ventilation side (13) and to compare the change with a threshold value (36), and wherein the system (1) is designed to apply positive pressure to the withdrawal side (12) in comparison to the ventilation side (13) so that the bag (2) bears against the wall (7) of the container (4).

11. The system according to claim 10, **characterised in that** the system (1) has a pressure accumulator volume (30) and is designed to bring the pressure accumulator volume (30) to a pressure which differs from the pressure of the ventilation side (13), and wherein the system (1) has a valve (21) which connects the pressure accumulator volume (30) to the ventilation side (13) by means of the chamber (14), and **in that** the system (1) comprises a pressure sensor (22) for determining a change in pressure while the connection is established.

12. The system according to claim 10 or 11, **characterised in that** the system (1) comprises one or more containers (4), preferably wherein an outer side of a wall (7) of the container (4) corresponds to an inner wall of the chamber (14), in particular wherein the system (1) is designed to connect a container (4) received in the chamber (14) in a sealed manner so that the withdrawal side (12) and the ventilation side (13) are separated from each other by means of the bag (2).

13. The system according to one of claims 10 to 12, **characterised in that** the system (1) is designed to insert containers (4) successively into the chamber (14) and, after the leak test, to reject such containers (4) that do not achieve a predetermined tightness.

14. A computer program product, in particular for operating a system (1) according to one of claims 10 to 13, with program code means,
**characterised in that**
the program code means, when executed, execute a method according to one of claims 1 to 9, preferably by means of the system (1) according to one of claims 10 to 13.

15. Use of a system (1) according to one of claims 10 to 13 for testing a container (4) having an internal bag (2) according to one of claims 1 to 9.

## Revendications

1. Procédé de test d'étanchéité d'une poche (2) à l'intérieur d'un récipient (4) comprenant une installation (1), l'installation (1) comportant une chambre (14), dans laquelle le récipient (4) est inséré, le récipient (4) présentant une ouverture d'extraction (9) et une ouverture de ventilation (11), l'intérieur du récipient (4) présentant un côté d'extraction (12) associé à l'ouverture d'extraction (9) et un côté de ventilation (13) associé à l'ouverture de ventilation (11), qui sont séparés l'un de l'autre par la poche (2), la chambre (14) reliant le côté d'extraction (12) et le côté de ventilation (13) de manière étanche et séparés fluidiquement l'un de l'autre et, dans la zone de l'ouverture d'extraction (9), la poche (2) étant disposée durablement scellée sur le récipient (4),
avec l'installation (1), le côté d'extraction (12) étant soumis à une pression positive par rapport au côté de ventilation (13), de telle sorte que la poche (2) repose contre la paroi (7) du récipient (4),
**caractérisé en ce que**
un volume de test fermé est généré avec ou à travers le côté de ventilation (13), dans lequel une pression ou une différence de pression est déterminée, après ou en fonction d'une durée de test, utilisée comme indicateur du degré d'étanchéité de la poche (2) prévue dans le réservoir (4).

2. Procédé selon la revendication 1, **caractérisé en ce que** dans un premier tronçon (33), le test est préparé en générant une pression négative du côté de ventilation (13), en particulier dans lequel une fuite importante est détectée lorsque la pression négative pouvant être produite n'atteint pas un seuil.

3. Procédé selon la revendication 2, **caractérisé en ce que** dans un deuxième tronçon (34), une période de carence est observée lorsqu'une pression négative prédéterminée est atteinte dans le premier tronçon (33).

4. Procédé selon l'une quelconque des revendications 1 à 3, **caractérisé en ce que** dans un troisième tronçon (35), une mesure est effectuée, en particulier une détermination de petites fuites, à la fin du troisième tronçon (35) et/ou de la mesure, une augmentation de la pression du côté de ventilation sous forme de différence de pression (P13) étant déterminée et de préférence comparée à une valeur seuil (36).

5. Procédé selon la revendication 4, **caractérisé en ce que** la valeur seuil (36) est déterminée en fonction de la pression du côté de ventilation (P13) au début du troisième tronçon (35), la valeur seuil (36) étant définie comme une augmentation de pression à prévoir à cause des fuites plus une valeur de tolérance supérieure à la pression du côté de ventilation (P13) au début du troisième tronçon (35) ou
**en ce que** la valeur seuil (36) est spécifiée en tant que pression absolue du côté de ventilation (P13), la valeur seuil (36) étant définie comme une augmentation de pression à prévoir à cause des fuites plus une valeur de tolérance supérieure à une pression négative minimale à atteindre.

6. Procédé selon la revendication 4 ou 5, **caractérisé en ce que** la durée du troisième tronçon (35) est de préférence supérieure à 0,5 s, en particulier supérieure à 1 s et/ou inférieure à 5 s, de préférence inférieure à 4 ou 3 s.

7. Procédé selon l'une quelconque des revendications précédentes, **caractérisé en ce que**, en particulier après un court temps d'attente pour éviter les imprécisions de mesure, il est procédé à une évaluation des fuites importantes, pendant laquelle la courbe de pression du vide est examinée pour rechercher des augmentations de pression plus fortes, le test d'étanchéité étant de préférence interrompu lorsqu'une fuite plus importante est identifiée lors de l'évaluation de l'augmentation de pression mesurée.

8. Procédé selon l'une quelconque des revendications précédentes, **caractérisé en ce qu'**une évaluation des petites fuites est réalisée, après une période d'attente prédéterminée,une augmentation de pression étant déterminée avec un capteur de pression (22), de préférence, lorsque l'augmentation de pression dépasse une valeur seuil connue, une étanchéité défaillante étant établie et le récipient (4) étant mis au rebut, trié pour l'éliminer ou rejeté, de préférence automatiquement.

9. Procédé selon l'une quelconque des revendications précédentes, **caractérisé en ce qu'**il est déterminé si une fuite importante a déjà été identifiée dans un procédé précédent, en particulier un procédé de détachement, le test d'étanchéité étant de préférence interrompu lors de l'identification d'une fuite importante.

10. Installation (1), conçue de préférence pour la mise en œuvre d'un procédé selon l'une quelconque des revendications précédentes, l'installation (1) comportant une chambre (14), dans laquelle un récipient (4) est inséré, le récipient (4) présentant une ouverture d'extraction (9) et une ouverture de ventilation (11) et l'intérieur du récipient (4) présentant un côté d'extraction (12) associé à l'ouverture d'extraction (9) et un côté de ventilation (13) associé à l'ouverture de ventilation (11), qui sont séparés l'un de l'autre par le matériau de poche (5), la chambre (14) reliant le côté d'extraction (12) et le côté de ventilation (13) de manière étanche et séparés fluidiquement l'un de l'autre et, dans la zone de l'ouverture d'extraction (9), la poche (2) étant disposée durablement scellée sur le récipient (4),
l'installation (1) pour le test d'étanchéité de poches (2) prévues dans des réservoirs (4) étant conçue au moyen d'une pression différentielle (25) entre le côté d'extraction (12) et le côté de ventilation (13),
**caractérisée en ce que**
l'installation (1) comporte un capteur de pression (22) et un dispositif d'évaluation relié au capteur de pression (22), conçu pour mesurer un changement de pression du côté de ventilation (13) et pour comparer le changement à une valeur seuil (36) et l'installation (1) étant conçue pour appliquer une pression positive sur le côté d'extraction (12) par rapport au côté de ventilation (13) de telle sorte que la poche (2) repose contre la paroi (7) du récipient (4).

11. Installation selon la revendication 10, **caractérisée en ce que** l'installation (1) présente un volume d'accumulateur de pression (30) et est adaptée pour amener le volume d'accumulateur de pression (30) à une pression différente de la pression du côté de ventilation (13) et l'installation (1) comportant une vanne (21) qui relie le volume de l'accumulateur de pression (30) au côté de ventilation (13) au moyen de la chambre (14) et **en ce que** l'installation (1) comprend un capteur de pression (22) pour déterminer un changement de pression pendant la réalisation de la liaison.

12. Installation selon la revendication 10 ou 11, **caractérisée en ce que** l'installation (1) comprend un ou plusieurs récipients (4), de préférence un côté extérieur d'une paroi (7) du récipient (4) correspondant à une paroi interne de la chambre (14), en particulier l'installation (1) étant adaptée pour relier de manière étanche un récipient (4) reçu dans la chambre (14), de telle sorte que le côté d'extraction (12) et le côté de ventilation (13) soient séparés l'un de l'autre au moyen de la poche (2).

13. Installation selon l'une quelconque des revendications 10 à 12, **caractérisée en ce que** l'installation (1) est conçue pour insérer successivement des récipients (4) dans la chambre (14) et pour trier, afin de les éliminer après le test d'étanchéité, de tels récipients (4) qui n'atteignent pas une étanchéité prédéfinie.

14. Produit programme d'ordinateur, en particulier pour faire fonctionner une installation (1) selon l'une quelconque des revendications 10 à 13, avec des moyens de code de programme,
**caractérisé en ce que**
les moyens de code de programme, lorsqu'ils sont exécutés, exécutent un procédé selon l'une quelconque des revendications 1 à 9, de préférence avec l'installation (1) selon l'une quelconque des revendications 10 à 13.

15. Utilisation d'une installation (1) selon l'une quelconque des revendications 10 à 13 pour tester un récipient (4) avec une poche interne (2) selon l'une quelconque des revendications 1 à 9.
